# EUROPEAN PATENT APPLICATION

(11) **EP 1 681 506 A2**
(43) Date of publication of application: **19.07.2006**
(21) Application number: 06000284.7
(22) Date of filing: 09.01.2006
(51) Int. Cl.: F16L 47/08, F16L 21/03

(54) **Joint for pipes of plastic material with a locking system**

(30) Priority: 14.01.2005 IT ra20050002
(71) Applicant: Argnani, Claudio, 48010 Fusignano RA (IT)
(72) Inventor: Argnani, Claudio, 48010 Fusignano RA (IT)
(74) Representative: Petruzziello, Aldo

(57) **Abstract**

The invention consists in a joint, of the sleeve type, between two plastic pipes, disposed coaxially one on the continuation of the other, where an annular gasket (3) is inserted between the female end (2) of a pipe, suitably shaped to contain inside it said gasket (3), and the male end of a second pipe (1), smooth and preferably chamfered on the edge.

Said gasket (3) has the dual capacity of forming the seal of the joint with an element of deformable material (preferably rubber) and at the same time of preventing an axial pulling apart of the two pipes by means of a circumferential element, facing towards the centre and shaped as a lip (8) or a tooth of sufficiently hard and strong material, that enters a suitable circumferential groove (9) in the outer surface of the end of the smooth pipe (1) coupled therewith.

## Description

In the prior art, the coupling of the pipes of plastic material (PVC, polypropylene, etc.) forming a piping is made by means of sleeve joints (also known as bell joints) consisting of a female end of a first pipe shaped and widened to an inside diameter barely greater than the outside diameter of a pipe and comprising along its axial length a suitable annular seat, of a sealing gasket housed in said annular seat and of a smooth end of a second pipe, preferably with a chamfered edge, to favour insertion thereof during assembly.

The gasket itself can act as the element forming its seat (as occurs in the a Rieber-Forsheda system) and then remain in the same position also after the assembly of the joint, or it can be inserted in a pre-formed seat at a later time (but in any case prior to assembly of the joint) and remain there as in the previous case.

The joint thus formed has the primary capacity of forming the sealing and the secondary capacity of absorbing dilatations of the pipes, consequent upon thermal variations and/or upon slight, normal axial sliding due to external causes; as an order of magnitude it can be said that, following a temperature change of 20°, a 6-metre long PVC pipe will vary in length by about 8-9 mm.

However, the joint is not able to absorb greater axial movements of the pipes, like those due to land slippage, to yielding of the supports and to other significant causes: the occurrence of these events can lead to axial pulling apart of the pipes from the joint, with interruption of the piping.

To prevent this occurrence, in certain cases solutions have been developed which have the purpose of preventing the pulling apart, or at least of making it more difficult.

A solution, described by the US patent 4,111,464 granted on 5 September 1978, provides for use in the joint of the gasket and of a second adequately resistant ring, placed in series with the gasket and independent therefrom, which is inserted in a proper circumferential cavity obtained partly on the inside of the female end and partly on the outside of the smooth (male) end of the joint, so as to materially prevent the pulling apart of the two pipes.

A second solution, described by the US patent 6,176,523 granted on 23 January 2001, provides for the end of one of the two pipes to be shaped to form a protruding element, such as to be able to couple with the teeth of the sealing element of the gasket, if a pulling apart movement takes place.

Both solutions are of considerable complexity and present a certain difficulty of assembly as a result of the addition of the locking elements.

Object of the present invention is advantageously to overcome these drawbacks by performing the same capacity (that is to prevent or to resist the pulling apart of two successive pipes) but by simplifying the construction and the assembly of the joint.

In fact, the annular gasket provided in the joint is a single one, shaped and structured so as to perform simultaneously the capacities of sealing and of resisting to the pulling apart; for this purpose, the toric surfaces thereof facing towards the central axis are shaped in a first area, so as to form a seal against the cylindrical outside surface of the coupled pipe, and in a second area, adjacent the first one, so as to form a suitable protruding strike or tooth, which is inserted upon the assembly in a corresponding groove formed on the outside surface of the coupled pipe and which is able to resist the pulling apart of the two adjacent pipes.

Since the two aforesaid capacities (that is the sealing and the resisting to the pulling apart) require materials with different characteristics, the gasket is composed of two different materials, having different characteristics and intended for the different purposes: the area devoted to the sealing must be elastic and deformable, the area devoted to resist the pulling apart must be strong and sufficiently hard and at the same time have a good resilience. These two materials are thus made integral with each other in different manners: for example they can be glued, hot moulded together or else mechanically snap inserted in one another; normally the first sector is of rubber and the second sector is of a plastic material or, in the case of the snap insertion solution, even of a metal.

Further characteristics and advantages of the present invention will be made more evident by the detailed description that follows of a preferred embodiment thereof, illustrated by way of non-limiting example in the appended figures.

Figure 1 shows an overall half-view (bottom) and a half-sectional view (top) of the joint;

Figure 2 shows an enlarged detail of the section of the joint, comprising the gasket, enclosed in the circle of Figure 1.

The components of the joint are, as a first element, the smooth end of the first pipe 1, which at its edge has a chamfer 4 to facilitate the assembly of the joint and, as a second element, the female end 2 of the second pipe, coaxial with the first pipe, shaped as a sleeve and having an inside diameter hardly greater than the outside diameter of the smooth pipe; the fitting 5 between said female end 2 and the remaining part of the second pipe is conical, preferably with a slope corresponding to that of the above mentioned chamfer 4.

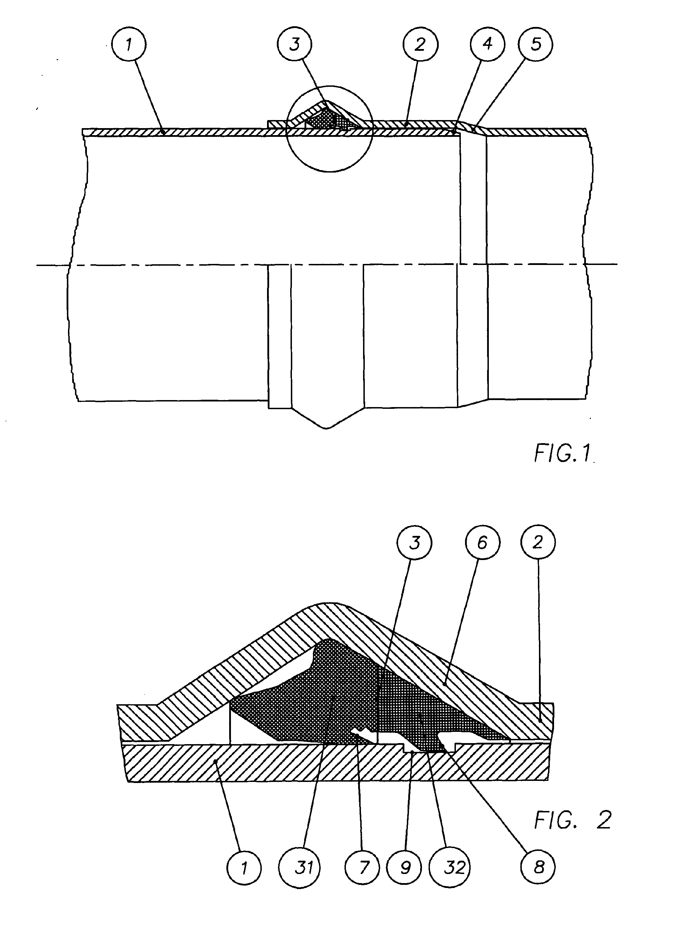

Along the axial length of the sleeve 2 a seat 6 is obtained to accommodate the gasket 3 that, when the joint is assembled and thus formed as in Figure 1, is comprised in the annular space identified by said seat 6 and by the cylindrical outside surface of the first pipe 1.

The gasket 3 can be inserted into the seat 6 already formed at any time prior to assembly the joint or it can itself act as the element forming the seat 6, as in the already cited Rieber-Forsheda system.

Said gasket is composed of two elements designated in Figure 2 with 31 and 32, respectively.

The element 31 serves to form the sealing between the seat 6 and the end of the first pipe 1 by means of a suitable pressure against the respective walls; in particular the sealing on the outside surface of the first pipe 1 is formed by means of a protruding lip 7, which any pressure inside the pipe contributes to increase; the material of said lip must be sufficiently elastic and deformable, preferably rubber.

The element 32 has the capacity of preventing or of impeding the pulling apart of the two pipes following axial traction forces; said capacity is realized by means of a protruding lip 8, which upon the assembly is inserted inside an annular groove 9 formed on the outside of the first pipe 1 in a suitable position; the shape and the thickness of the lip 8 are such that it can be easily deformed during insertion of the first pipe 1 inside the sleeve 2 on assembling the joint and that it can resist movements in the opposite direction, as occurs during the pulling apart of the two pipes, by lodging against the wall of the groove; for this purpose the material of the element 32 must be sufficiently rigid and strong.

The two elements forming the gasket, which must therefore be different from each other, are firmly joined by gluing or by a common hot pressing process, so that the gasket forms a single item.

The annular groove 9 is quite deep radially, so as to allow a sufficient interference between the lip 8 of the gasket and the first pipe 1; furthermore the axial length and the shape thereof must in any case allow some sliding between the two concurrent pipes, corresponding to the normal thermal dilatations that the piping must endure.

The elements shown in Figures 1 and 2 can also be made with geometrical, constructional or structural variants that are functionally equivalent and thus come within the scope of the invention: for example the two lips belonging to the gasket 3 (the sealing lip 7 and the locking lip 8, respectively) can be of a shape, a size and an operational type different from those of the Figures, provided they are suitable for the intended purpose; the shape of the gasket 3 for the outer part of the diameters (and thus also the shape of its containing seat 6 in the female sleeve 2) can be different from those of the Figures; the two sectors (31, 32) forming the gasket 3 can be connected to each other in a manner different from that indicated in the Figures (for example they can be snap inserted mechanically one in the other by means of suitable fixing groves), but even maintaining the solutions of gluing or of common hot pressing, the shape of the joint of the two sectors (31, 32) can be different from that of the Figures, the shape of the groove 9 can be different from that of the Figures (for example dovetail shaped), provided it suits the purpose of impeding, in conjunction with the tooth 8, the pulling apart of the two pipes confluent in the joint; the shape of the female sleeve 2 can be different from that of the Figures, provided it is suitable for the capacity required within the joint.

## Claims

1. A joint, of the sleeve type, between two confluent pipes of plastic material, which are disposed on the same axis with the smooth end of the first pipe (1) inserted for an axial portion inside the female end (2) of the second pipe, said female end (2) having an inside diameter hardly greater than the outside diameter of the first pipe (1) and containing along its axial length an annular seat (6) to house a joint sealing gasket (3), **characterized in that** the joint sealing gasket (3) has the further capacity of impeding, till preventing, the axial pulling apart of the two pipes due to any external cause and comprises at least a first annular protruding lip (8), facing towards the central axis, which is inserted, upon the assembly of the joint, inside an annular groove (9) formed in the cylindrical outside surface of the smooth end of the first pipe (1).

2. A joint according to claim 1, **characterized in that** the smooth end of the first pipe (1) which couples in the joint with the sleeve end (2) of the second pipe has a chamfered outer edge.

3. A joint according to claim 1, **characterized in that** the aforesaid annular sealing gasket (3) has a first annular element (31) whose surface facing toward the central axis has a second protruding lip (7) which, by adhering to the cylindrical outer surface of the first pipe (1), ensures the sealing capacity.

4. A joint according to claim 3, **characterized in that** the second protruding lip (7) is composed of elastic, deformable material, particularly suited to the sealing capacity.

5. A joint according to claim 3, **characterized in that** the annular sealing gasket (3) further comprises a second annular element (32), on the surface whereof facing the central axis of the first pipe (1) the first annular protruding lip (8) being provided.

6. A joint according to claim 3, **characterized in that** the second protruding lip (7) is shaped so as to be deformed with sufficient ease to allow the end of the first pipe (1) to be inserted inside the sleeve end (2) of the other pipe during the assembly of the joint.

7. A joint according to claim 1, **characterized in that** the first protruding lip (8) is shaped so as to resist pulling apart of the two pipes by lodging against the walls of the annular groove (9) formed in the smooth outer surface of the end of the first pipe (1).

8. A joint according to claim1, **characterized in that** the depth of the annular groove (9) is such as to ensure a sufficient interference between the first annular protruding lip (8) of the gasket (3) and the wall of the first pipe (1).

9. A joint according to claim 5, **characterized in that** the second annular element (32) comprising the first annular protruding lip (8) is made of a material of such a strength, hardness and resilience as to resist, together with the thickness and the shape of the first annular protruding lip (8), the axial pulling apart stresses on the pipes.

10. A joint according to claims 3 and 5, **characterized in that** the two annular elements (31, 32) of the gasket (3) which perform the sealing and preventing pulling apart capacity are joined integrally and rigidly together to form a single annular gasket (3).

11. A joint according to claim 10, **characterized in that** the two annular elements (31, 32) of the annular gasket (3) are joined by gluing.

12. A joint according to claim 10, **characterized in that** the two annular elements (31, 32) of the annular gasket (3) are joined by simultaneous hot pressing of the two annular elements (31, 32).

13. A joint according to claim 10, **characterized in that** the two annular elements (1, 32) of the annular gasket (3) are joined by mechanical snap insertion of one annular element (31, respectively 32) in the other annular element (32, respectively 31).
